# EUROPÄISCHE PATENTSCHRIFT

(11) **EP 3 320 031 B1**
(45) Veröffentlichungstag und Bekanntmachung des Hinweises auf die Patenterteilung: **28.11.2018**
(21) Anmeldenummer: 16736130.2
(22) Anmeldetag: 06.07.2016
(51) Int. Cl.: C08J 7/12, C08G 69/26, C08L 77/06

(54) **HERSTELLUNG VON OBERFLÄCHENFUNKTIONALISIERTEN POLYAMIDEN**
PREPARATION OF SURFACE FUNCTIONALISED POLYAMIDES
FABRICATION DE POLYAMIDES A SURFACE FONCTIONNALISEE

(30) Priorität: 09.07.2015 EP 15176129
(43) Veröffentlichungstag der Anmeldung: 16.05.2018
(73) Patentinhaber: BASF SE, 67056 Ludwigshafen (DE)
(72) Erfinder: HABRAKEN, Gijsbrecht Jacobus Maria, 67061 Ludwigshafen (DE); SPRAFKE, Johannes Klaus, 67346 Speyer (DE); DA SILVA, Marion, 67061 Ludwigshafen (DE)
(74) Vertreter: BASF IP Association
(86) Internationale Anmeldenummer: PCT/EP2016/066008
(87) Internationale Veröffentlichungsnummer: WO 2017/005804

(56) Entgegenhaltungen:
- US-A1- 2014 135 449
- MITIAKOUDIS ANASTASSIOS ET AL: "Synthesis and characterization of furanic polyamides", MACROMOLECULES, AMERICAN CHEMICAL SOCIETY, US, Bd. 24, Nr. 4, 1. Februar 1991 (1991-02-01), Seiten 830-835, XP009157490, ISSN: 0024-9297
- CLAUDE MOREAU ET AL: "Recent Catalytic Advances in the Chemistry of Substituted Furans from Carbohydrates and in the Ensuing Polymers", TOPICS IN CATALYSIS, KLUWER ACADEMIC PUBLISHERS-PLENUM PUBLISHERS, NE, Bd. 27, Nr. 1-4, 1. Februar 2004 (2004-02-01), Seiten 11-30, XP019292015, ISSN: 1572-9028

## Beschreibung

Die vorliegende Erfindung betrifft ein Verfahren zur Herstellung eines oberflächenfunktionalisierten Formteils (oF), das eine funktionalisierte Oberfläche (fO) aufweist. Dabei wird eine Oberfläche (O) eines Formteils (F) mit einer dienophilhaltigen Lösung (dL) in Kontakt gebracht. Die Oberfläche (O) enthält ein Polyamid (P), das Furaneinheiten enthält. Diese Furaneinheiten können mit dem in der dienophilhaltigen Lösung (dL) enthaltenen mindestens einen Dienophil reagieren unter Erhalt des oberflächenfunktionalisierten Formteils (oF), das die funktionalisierte Oberfläche (fO) aufweist.

Außerdem betrifft die vorliegende Erfindung ein oberflächenfunktionalisiertes Formteil (oF), erhältlich nach dem erfindungsgemäßen Verfahren.

Polyamide sind im Allgemeinen teilkristalline Polymere, die industriell von besonderer Bedeutung sind, da sie sich durch sehr gute mechanische Eigenschaften auszeichnen, insbesondere besitzen sie eine hohe Festigkeit, Steifigkeit und Zähigkeit, eine gute Chemikalienbeständigkeit sowie eine hohe Abriebfestigkeit und Kriechstromfestigkeit. Diese Eigenschaften sind insbesondere von Bedeutung für die Herstellung von Spritzgussteilen. Eine hohe Zähigkeit ist besonders wichtig für die Verwendung von Polyamiden als Verpackungsfolien. Aufgrund ihrer mechanischen Eigenschaften werden Polyamide industriell zur Herstellung von Textilien wie Angelschnüren, Kletterseilen und Teppichböden verwendet. Außerdem finden Polyamide Verwendung für die Herstellung von Dübeln, Schrauben und Kabelbindern. Darüber hinaus werden Polyamide als Lacke, Klebstoffe und Beschichtungsmaterialien eingesetzt.

Im Laufe der letzten Jahre haben flüssigkeitsabweisende Oberflächen zunehmend an Bedeutung gewonnen, insbesondere wasserabweisende (hydrophobe) und ölabweisende (oleophobe; hydrophile) Oberflächen sind hierbei von besonderer Bedeutung. Polyamide besitzen häufig keine ausreichend flüssigkeitsabweisenden Oberflächen, so dass es in bestimmten Anwendungsbereichen notwendig ist, Polyamide einzusetzen, deren Oberfläche funktionalisiert wurde, um ausreichend flüssigkeitsabweisende Oberflächen zu erhalten. Im Stand der Technik sind verschiedene Verfahren, um stärker flüssigkeitsabweisende Oberflächen auf Polymeren, insbesondere auf Polyamiden, herzustellen, beschrieben. Eine Möglichkeit besteht darin, bei der Herstellung von Polyamiden die Polyamide mit hydrophoben oder hydrophilen Comonomeren bzw. Polymeren zu polymerisieren, so dass ein Copolymer erhalten wird. Ebenso ist es möglich, ein Polyamid mit oleophoben oder hydrophoben Polymeren zu pfropfen.

Bei beiden Verfahren ist nachteilig, dass die so erhaltenen Copolymere bzw. gepfropften Polyamide häufig andere Eigenschaften aufweisen als die reinen Polyamide. Beispielsweise kann sich die Glasübergangstemperatur T_{G} ändern und die Kristallinität der Polymere wird unter Umständen reduziert. Zudem sind die Verfahren synthetisch aufwändig und mit hohen Kosten verbunden.

Ein weiteres Problem ist, dass Formteile, die aus den so hergestellten Copolymeren produziert werden, nicht zwangsläufig an ihrer gesamten Oberfläche modifiziert worden sind und die flüssigkeitsabweisenden Eigenschaften nur an den Stellen der Oberfläche erzielt werden, an denen sich die hydrophoben oder oleophoben Bereiche an der Oberfläche befinden.

Im Stand der Technik sind daher Verfahren beschrieben, mit denen die Oberflächen von Formkörpern inhärent hydrophob oder oleophob modifiziert werden, indem sie beispielsweise mit einem hydrophoben oder oleophoben Polymerfilm überzogen werden, um so flüssigkeitsabweisende Oberflächen auf den Formkörpern zu erzeugen. Darüber hinaus kann die Struktur der Oberfläche im Mikrometer- oder Nanometerbereich verändert werden, beispielsweise durch Strukturierung oder Aufrauen der Oberfläche. Selbstverständlich sind auch Kombinationen aus den Verfahren möglich.

Nachteilig bei diesen Verfahren ist allerdings der apparativ aufwändige Aufbau. Zudem muss sichergestellt sein, dass die hydrophoben oder oleophoben Polymere, die als Polymerfilm auf das Formteil aufgebracht werden sollen, mit den im Formteil enthaltenen Polymeren kompatibel sind, so dass der hydrophobe oder oleophobe Polymerfilm auf dem Formteil haften bleibt.

Es besteht daher Bedarf an Verfahren, die es ermöglichen, oberflächenfunktionalisierte Formteile herzustellen, die die zuvor beschriebenen Nachteile nicht oder in vermindertem Maße aufweisen.

Die der vorliegenden Erfindung zugrunde liegende Aufgabe ist somit die Bereitstellung eines Verfahrens zur Herstellung eines oberflächenfunktionalisierten Formteils, das die vorstehend beschriebenen Nachteile der Verfahren zur Herstellung von oberflächenfunktionalisierten Formteilen nicht oder in vermindertem Maße aufweist. Das Verfahren soll zudem möglichst einfach und kostengünstig durchführbar sein.

Gelöst wird diese Aufgabe durch ein Verfahren zur Herstellung eines oberflächenfunktionalisierten Formteils (oF), das eine funktionalisierte Oberfläche (fO) aufweist, umfassend die Schritte
i) Bereitstellen eines Formteils (F), das eine Oberfläche (O) aufweist, die ein Polyamid (P) enthält, wobei das Polyamid (P) Dieneinheiten der allgemeinen Formel (I) 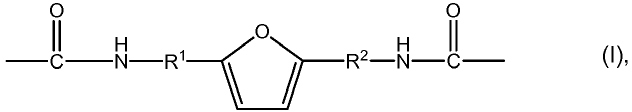 in der
   R¹, R² unabhängig voneinander ausgewählt sind aus C₁-C₁₀-Alkandiyl,
   enthält,
ii) Inkontaktbringen der Oberfläche (O) des in Schritt i) bereitgestellten Formteils (F) mit einer dienophilhaltigen Lösung (dL), die mindestens ein Dienophil enthält, wobei das mindestens eine Dienophil mindestens eine Dienophileinheit, die gegenüber den im Polyamid (P) enthaltenen Dieneinheiten (I) reaktiv ist, enthält, unter Erhalt des oberflächenfunktionalisierten Formteils (oF), das die funktionalisierte Oberfläche (fO) aufweist.

Das erfindungsgemäße Verfahren zeichnet sich durch seine einfache Durchführbarkeit aus. Durch das erfindungsgemäße Verfahren kann gezielt die Oberfläche (O) des Formteils (F) modifiziert werden. Vorteilhaft ist außerdem, dass ausschließlich die Oberfläche (O) des Formteils (F) funktionalisiert wird. Dies bedeutet, dass die Eigenschaften des in dem Formteil (F) enthaltenen Materials, insbesondere des Polymers, wie beispielsweise seine mechanischen Eigenschaften, erhalten bleiben, und dass daher auch die Eigenschaften des Formteils (F) erhalten bleiben und lediglich die Oberfläche (O) funktionalisiert wird. Vorteilhaft ist außerdem, dass die Funktionalisierung der Oberfläche (O) reversibel ist und daher auch später die Eigenschaften der funktionalisierten Oberfläche (fO) verändert werden können.

Nachfolgend wird das erfindungsgemäße Verfahren näher erläutert.

### Schritt i)

In Schritt i) wird ein Formteil (F), das eine Oberfläche (O) aufweist, die ein Polyamid (P) enthält, wobei das Polyamid (P) Dieneinheiten (I) enthält, bereitgestellt.

Das Formteil (F) kann alle dem Fachmann bekannten Formen aufweisen. Beispielsweise kann es als Pulver, Granulat, Folie, Platte oder fertiges Bauteil vorliegen. Bevorzugt liegt es als Platte oder fertiges Bauteil vor.

Unter "Folie" wird im Rahmen der vorliegenden Erfindung ein planares Formteil (F) verstanden, das ein Dicke im Bereich von 20 µm bis 500 mm, vorzugsweise im Bereich von 50 µm bis 300 µm aufweist. Unter "Platte" wird ein planares Formteil (F) verstanden, das eine Dicke im Bereich von > 0,5 mm bis 100 mm aufweist.

Unter einem Pulver werden im Rahmen der vorliegenden Erfindung Partikel verstanden, die eine Größe im Bereich von 1 bis 500 µm, bevorzugt im Bereich von 20 bis 150 µm, aufweisen, bestimmt durch Sieben, Lichtstreuung oder Mikroskopie.

Unter einen Granulat werden im Rahmen der vorliegenden Anmeldung Partikel verstanden, die eine Größe im Bereich von > 0,5 bis 10 mm, bevorzugt im Bereich von 1 bis 5 mm, aufweisen, bestimmt durch Mikroskopie oder eine Schiebelehre.

Fertige Bauteile, die als Formteil (F) eingesetzt werden können, sind beispielsweise Bauteile für den Bausektor, den Automobilbau, den Schiffsbau, den Schienenfahrzeugbau, den Containerbau, für sanitäre Anlagen und/oder für Luft- und Raumfahrt. Bevorzugte fertige Bauteile sind beispielsweise Armaturenbretter, Verpackungsfolien sowie Monofilamente, beispielsweise für Fischnetze oder Angelschnüre.

Das Formteil (F) kann alle dem Fachmann bekannten Materialien enthalten, unter der Voraussetzung, dass es eine Oberfläche (O) aufweist, die ein Polyamid (P) enthält, das Dieneinheiten (I) enthält. Vorzugsweise enthält das Formteil mindestens ein Polymer. Besonders bevorzugt enthält das Formteil (F) mindestens ein Polyamid, insbesondere bevorzugt enthält das Formteil (F) das Polyamid (P), welches Dieneinheiten (I) enthält.

Beispielsweise enthält das Formteil mindestens 20 Gew.-%, bevorzugt mindestens 50 Gew.-% und insbesondere bevorzugt mindestens 90 Gew.-% des Polyamids (P), das Dieneinheiten (I) enthält, bezogen auf das Gesamtgewicht an dem mindestens einen Polymer, das in dem Formteil (F) enthalten ist, bevorzugt bezogen auf das Gesamtgewicht des Formteils (F).

Für das gegebenenfalls im Formteil (F) enthaltene Polyamid (P), das Dieneinheiten (I) enthält, gelten die nachfolgend beschriebenen Ausführungen und Bevorzugungen für das Polyamid (P), das Dieneinheiten (I) enthält und in der Oberfläche (O) enthalten ist, entsprechend.

Das Formteil (F) kann darüber hinaus Additive enthalten. Derartige Additive sind dem Fachmann bekannt und beispielsweise Flammschutzmittel, Füllstoffe, Verstärkungsmaterialien, Weichmacher, Antioxidantien, UV-Stabilisatoren und Üblicherweise enthält das Formteil (F) im Bereich von 0 bis 70 Gew.-%, bevorzugt im Bereich von 0,5 bis 50 Gew.-% und insbesondere bevorzugt im Bereich von 1 bis 35 Gew.% der Additive, bezogen auf das Gesamtgewicht des Formteils (F).

Erfindungsgemäß weist das Formteil (F) eine Oberfläche (O) auf, die das Polyamid (P) enthält, das Dieneinheiten (I) enthält.

Unter dem Begriff "eine Oberfläche (O)" werden vorliegend sowohl genau eine Oberfläche als auch zwei oder mehr Oberflächen verstanden.

Die Oberfläche (O), die das Polyamid (P) enthält, das Dieneinheiten (I) enthält, kann lokal an einer vorgegebenen Position des Formteils (F) ausgebildet sein. Es ist auch möglich, dass die Oberfläche (O) das Formteil (F) vollständig umschließt. Es ist außerdem möglich, dass das Formteil (F) die Oberfläche (O) nur auf der Oberseite des Formteils (F) oder nur auf der Unterseite des Formteils (F) aufweist.

Für den Fall, dass die Oberfläche (O) nur lokal an einer Position auf dem Formteil (F) ausgebildet ist, bildet die Oberfläche (O) beispielsweise 1 bis 99 % der Gesamtoberfläche des Formteils (F), bevorzugt 10 bis 60% und insbesondere bevorzugt 20 bis 40 % der Gesamtoberfläche des Formteils (F).

Erfindungsgemäß enthält die Oberfläche (O) das Polyamid (P), das Dieneinheiten (I) enthält. Die Oberfläche (O) enthält beispielsweise im Bereich von 30 bis 100 Gew.-% des Polyamids (P), bevorzugt im Bereich von 80 bis 99 Gew.-% des Polyamids (P) und insbesondere bevorzugt im Bereich von 95 bis 99 Gew.-% des Polyamids (P), jeweils bezogen auf das Gesamtgewicht der Oberfläche (O).

Die Oberfläche (O) kann darüber hinaus weitere, von dem mindestens einen Polyamid (P) verschiedene Polymere enthalten. Derartige Polymere sind dem Fachmann bekannt.

Die Oberfläche (O) kann darüber hinaus Additive enthalten. Derartige Additive sind dem Fachmann bekannt und beispielsweise Flammschutzmittel, Verstärkungsmittel, Füllstoffe, Weichmacher, Antioxidationsmittel, UV-Stabilisatoren und Pigmente.

Beispielsweise enthält die Oberfläche (O) im Bereich von 0 bis 70 Gew.-%, bevorzugt im Bereich von 1 bis 20 Gew.-% und insbesondere bevorzugt im Bereich vom 1 bis 5 Gew.% der Additive, bezogen auf das Gesamtgewicht der Oberfläche (O).

"Ein Polyamid (P)" bedeutet im Rahmen der vorliegenden Erfindung sowohl genau ein Polyamid (P) als auch eine Mischung aus zwei oder mehr Polyamiden (P).

Die Oberfläche (O) enthält das Polyamid (P), das Dieneinheiten als wiederholende Einheiten der allgemeinen Formel (I) 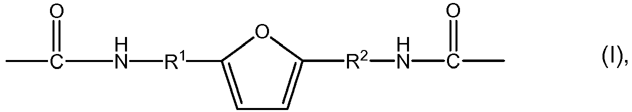 worin R¹ und R² die oben beschriebenen Bedeutungen haben, enthält.

Die Dieneinheiten werden auch als "Furaneinheiten" bezeichnet. Die Begriffe "Furaneinheiten" und "Dieneinheiten" werden im Rahmen der vorliegenden Erfindung synonym gebraucht und besitzen daher dieselbe Bedeutung.

Die Furaneinheiten als wiederholende Einheiten der allgemeinen Formel (I) sind bevorzugt in der Hauptkette des Polyamids (P) enthalten. Insbesondere bevorzugt enthält das Polyamid (P) keine Seitenketten, die Furaneinheiten als wiederholende Einheiten der allgemeinen Formel (I) enthalten, am meisten bevorzugt enthält das Polyamid (P) keine Seitenketten. Das Polyamid (P) ist also am meisten bevorzugt ein lineares Polyamid (P).

In einer bevorzugten Ausführungsform haben R¹ und R² in der allgemeinen Formel (I) die folgende Bedeutung.

R¹, R² sind unabhängig voneinander ausgewählt aus C₁-C₄-Alkandiyl,
bevorzugt sind R¹, R² dasselbe C₁-C₄-Alkandiyl,
am meisten bevorzugt sind in der allgemeinen Formel (I)
R¹, R² beide Methylen.

Unter "C₁-C₁₀-Alkandiyl" wie beispielsweise oben für R¹ und R² für die in dem Polyamid (P) enthaltenen Dieneinheiten der allgemeinen Formel (I) beschrieben, wird im Rahmen der vorliegenden Erfindung ein Kohlenwasserstoff mit 1 bis 10 Kohlenstoffatomen und zwei freien Valenzen verstanden. Es handelt sich also um ein Biradikal mit 1 bis 10 Kohlenstoffatomen. "C₁-C₁₀-Alkandiyl" umfasst sowohl lineare als auch zyklische sowie gesättigte und ungesättigte Kohlenwasserstoffe mit 1 bis 10 Kohlenstoffatomen und zwei freien Valenzen. Kohlenwasserstoffe mit einem zyklischen und einem linearen Anteil fallen ebenfalls unter den Begriff "C₁-C₁₀-Alkandiyl". Beispiele für C₁-C₁₀-Alkandiyle sind Methylen, Ethylen (Ethan-1,2-Diyl, Dimethylen), Propan-1,3-Diyl (Trimethylen), Propylen (Propan-1,2-Diyl) und Butan-1,4-Diyl (Tetramethylen). Entsprechende Ausführungen gelten für "C₁-C₄-Alkandiyl".

Das Polyamid (P) kann nach allen dem Fachmann bekannten Methoden hergestellt werden.

In einer bevorzugten Ausführungsform wird das Polyamid (P) hergestellt durch Polymerisation aus einer Reaktionsmischung (RM) bei einer Reaktionstemperatur T_{R}, wobei die Reaktionsmischung (RM) die folgenden Komponenten enthält.
A1) mindestens ein Lactam
A2) mindestens ein Diamin der allgemeinen Formel (II) 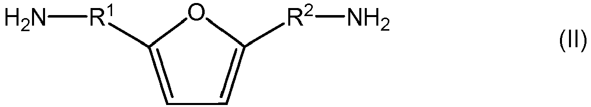 in der
   R¹, R² unabhängig voneinander ausgewählt sind aus C₁-C₁₀-Alkandiyl,
A3) mindestens ein Dicarbonsäurederivat ausgewählt aus der Gruppe bestehend aus einer Dicarbonsäure der allgemeinen Formel (III), einem Dicarbonsäureester der allgemeinen Formel (IV) und einem Dinitril der allgemeinen Formel (V)

   HOOC-R³-COOH (III)

   R⁵OOC-R⁴-COOR⁶ (IV)

   NC-R⁷-CN (V)

   in denen
   - R³, R⁴, R⁷: unabhängig voneinander ausgewählt sind aus der Gruppe bestehend aus einer Bindung, unsubstituiertem oder zumindest monosubstituiertem C₁-C₄₀-Alkandiyl und unsubstituiertem oder zumindest monosubstituiertem C₆-C₄₀-Arylen, wobei
   die Substituenten ausgewählt sind aus der Gruppe bestehend aus F, Cl, Br, I, OR⁸, C₁-C₁₀-Alkyl und C₆-C₁₀-Aryl, wobei
   R⁸ ausgewählt ist aus der Gruppe bestehend aus H und C₁-C₁₀-Alkyl;
   - R⁵, R⁶: unabhängig voneinander ausgewählt sind aus der Gruppe bestehend aus unsubstituiertem oder zumindest monosubstituiertem C₁-C₂₀-Alkyl, unsubstituiertem oder zumindest monosubstituiertem C₆-C₂₀-Aryl und unsubstituiertem oder zumindest monosubstituiertem C₆-C₂₀-Aralkyl, wobei
   die Substituenten ausgewählt sind aus der Gruppe bestehend aus F, Cl, Br, I, OR⁹ und C₁-C₁₀-Alkyl, wobei
   R⁹ ausgewählt ist aus der Gruppe bestehend aus H und C₁-C₁₀-Alkyl; und
A4) Wasser.

Die Reaktionsmischung (RM) enthält als Komponente A1) mindestens ein Lactam, als Komponente A2) mindestens ein Diamin (II), als Komponente A3) mindestens ein Dicarbonsäurederivat, ausgewählt aus der Gruppe bestehend aus einer Dicarbonsäure (III), einem Dicarbonsäureester (IV) und einem Dinitril (V), als Komponente A4) Wasser und optional als Komponente A5) von 0 bis 5 Gew.-% mindestens einen Endgruppenreglers, bezogen auf das Gesamtgewicht der Komponenten A1) bis A5).

In einer Ausführungsform der vorliegenden Erfindung enthält die Reaktionsmischung (RM) als Komponente A1) im Bereich von 26 bis 98 Gew.-% mindestens eines Lactams, als Komponente A2) im Bereich von 0,5 bis 35 Gew.-% mindestens eines Diamins (II), als Komponente A3) im Bereich von 0,5 bis 30 Gew.-% mindestens eines Dicarbonsäurederivats, als Komponente A4) im Bereich von 1 bis 30 Gew.-% Wasser und als Komponente A5) im Bereich von 0 bis 1 Gew.-% mindestens eines Endgruppenreglers, wobei die Gewichtsprozent jeweils bezogen sind auf das Gesamtgewicht der Komponenten A1) bis A4) bzw. bezogen auf das Gesamtgewicht der Komponenten A1) bis A5), für den Fall, dass die Reaktionsmischung (RM) die Komponente A5) enthält.

Erfindungsgemäß beziehen sich die Gew.-%-Angaben der Komponenten A1), A2), A3), A4) sowie optional der Komponente A5) auf das Gesamtgewicht der in der Reaktionsmischung (RM) enthaltenen Komponenten A1), A2), A3), A5) sowie optional der Komponente A5).

Für den Fall, dass die Komponente A5) in der Reaktionsmischung (RM) nicht enthalten ist, beziehen sich die Gew.-%-Angaben der Komponenten A1), A2), A3) und A4) auf das Gesamtgewicht der in der Reaktionsmischung (RM) enthaltenen Komponenten A1), A2), A3) und A4).

Für den Fall, dass die Komponente A5) in der Reaktionsmischung (RM) enthalten ist, beziehen sich die Gew.-%-Angaben der Komponenten A1), A2), A3), A4) und A5) auf das Gesamtgewicht der in der Reaktionsmischung (RM) enthaltenen Komponenten A1), A2), A3), A4) und A5).

In einer bevorzugten Ausführungsform beziehen sich die Gew.-%-Angaben der Komponenten A1), A2), A3), A4) sowie optional der Komponente A5) auf das Gesamtgewicht der Reaktionsmischung (RM).

In einer Ausführungsform der vorliegenden Erfindung enthält die Reaktionsmischung (RM) somit
26 bis 98 Gew.-% der Komponente A1),
0,5 bis 35 Gew.-% der Komponente A2),
0,5 bis 30 Gew.-% der Komponente A3) und
1 bis 30 Gew.-% der Komponente A4),
wobei die Gewichtsprozent jeweils bezogen sind auf das Gesamtgewicht der Komponenten A1) bis A4) bzw. bezogen auf das Gesamtgewicht der Komponenten A1) bis A5), bevorzugt bezogen auf das Gesamtgewicht der Reaktionsmischung (RM).

In einer bevorzugten Ausführungsform der vorliegenden Erfindung enthält die Reaktionsmischung (RM)
50 bis 89 Gew.-% der Komponente A1),
5 bis 25 Gew.-% der Komponente A2),
5 bis 25 Gew.-% der Komponente A3),
1 bis 20 Gew.-% der Komponente A4) und
0,1 bis 0,9 Gew.-% der Komponente A5),
wobei die Gewichtsprozent jeweils bezogen sind auf das Gesamtgewicht der Komponenten A1) bis A5), bevorzugt bezogen auf das Gesamtgewicht der Reaktionsmischung (RM).

In einer besonders bevorzugten Ausführungsform der vorliegenden Erfindung enthält die Reaktionsmischung (RM) somit
75 bis 82 Gew.-% der Komponente A1),
8 bis 12 Gew.-% der Komponente A2),
8 bis 13 Gew.-% der Komponente A3),
1 bis 5 Gew.-% der Komponente A4) und
0,1 bis 0,75 Gew.-% der Komponente A5),
wobei die Gewichtsprozent jeweils bezogen sind auf das Gesamtgewicht der Komponenten A1) bis A5), bevorzugt bezogen auf das Gesamtgewicht der Reaktionsmischung (RM).

Die Summe der Gewichtsprozente der Komponenten A1) bis A5) addiert sich im Allgemeinen zu 100 Gew.-%.

Sämtliche Gewichtsprozentangaben der Komponenten A1) bis A5) beziehen sich, soweit nicht anders angegeben, auf die Zusammensetzung der Reaktionsmischung (RM) vor Beginn der Polymerisation. Unter der "Zusammensetzung der Reaktionsmischung (RM) vor Beginn der Polymerisation" wird im Rahmen der vorliegenden Erfindung die Zusammensetzung der Reaktionsmischung (RM) verstanden bevor die in der Reaktionsmischung (RM) enthalten Komponenten A1) bis A5) miteinander zu reagieren beginnen, bevor also die Polymerisation einsetzt. Die in der Reaktionsmischung (RM) enthalten Komponenten A1) bis A5) liegen dann also noch in ihrer unreagierten Form vor. Es versteht sich von selbst, dass die in der Reaktionsmischung (RM) enthaltenen Komponenten A1) bis A5) während der Polymerisation zumindest teilweise miteinander reagieren und sich daher das Verhältnis der Komponenten A1) bis A5) untereinander ändert, ebenso wie sich die in der Reaktionsmischung (RM) enthaltenen Komponenten A1) bis A5) während der Polymerisation ändern. Dem Fachmann sind diese Reaktionen bekannt.

Unter Lactam werden erfindungsgemäß zyklische Amide verstanden, die im Ring 3 bis 12 Kohlenstoffatome, bevorzugt 6 bis 12 Kohlenstoffatome aufweisen. Geeignete Lactame sind beispielsweise ausgewählt aus der Gruppe bestehend aus 3-Aminopropansäurelactam (β-Lactam; β-Propiolactam), 4-Aminobutansäurelactam (γ-Lactam; γ-Butyrolactam), 5-Aminopentansäurelactam (δ-Lactam; δ-Valerolactam), 6-Aminohexansäurelactam (ε-Lactam; ε-Caprolactam), 7-Aminoheptansäurelactam (ζ-Lactam; ζ-Heptanolactam), 8-Aminooktansäurelactam (η-Lactam; η-Oktanolactam), 9-Nonansäurelactam (θ-Lactam; θ-Nonanolactam), 10-Dekansäurelactam (ω-Dekanolactam), 11-Undekansäurelactam (ω-Undekanolactam) und 12-Dodekansäurelactam (ω-Dodekanolactam).

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen, die unabhängig voneinander ausgewählt sind aus der Gruppe bestehend aus C₁- bis C₁₀-Alkyl, C₅- bis C₆-Cycloalkyl und C₅- bis C₁₀-Aryl.

Als C₁- bis C₁₀-Alkylsubstituenten sind beispielsweise Methyl, Ethyl, Propyl, Isopropyl, n-Butyl, sec.-Butyl und tert.-Butyl geeignet. Ein geeigneter C₅- bis C₆-Cycloalkylsubstituent ist beispielsweise Cyclohexyl. Bevorzugte C₅- bis C₁₀-Arylsubstituenten sind Phenyl und Anthranyl.

Bevorzugt werden unsubstituierte Lactame eingesetzt, wobei 12-Dodekansäurelactam (ω-Dodekanolactam) und ε-Lactam (ε-Caprolactam) bevorzugt sind. Besonders bevorzugt ist ε-Lactam (ε-Caprolactam).

ε-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel C₆H₁₁NO. Verfahren zur Herstellung von Caprolactam sind dem Fachmann als solche bekannt.

In einer bevorzugten Ausführungsform ist Komponente A2) mindestens ein Diamin (II), worin R¹, R² unabhängig voneinander ausgewählt sind aus C₁-C₄-Alkandiyl.

Besonders bevorzugt ist Komponente A2) mindestens ein Diamin (II), worin R¹, R² dasselbe C₁-C₄-Alkandiyl sind.

Insbesondere bevorzugt ist Komponente A2) mindestens ein Diamin (II), worin R¹, R² beide Methylen sind.

Wenn R¹ und R² beide Methylen sind, so ist das Diamin (II) 2,5-Bis(aminomethyl)furan. 2,5-Bis(aminomethyl)furan hat die CAS-Nummer 2213-51-6.

Die Reaktionsmischung (RM) kann in einer Ausführungsform außerdem noch mindestens ein weiteres Diamin (Komponente A2')) enthalten.

Geeignete weitere Diamine (Komponente A2')) sind dem Fachmann als solche bekannt. Es versteht sich von selbst, dass das mindestens eine weitere Diamin (Komponente A2')) von der Komponente A2), dem Diamin (II), verschieden ist. Bevorzugt ist das mindestens eine weitere Diamin ausgewählt aus Alkandiaminen mit 4 bis 36 Kohlenstoffatomen, insbesondere Alkandiaminen mit 6 bis 12 Kohlenstoffatomen sowie aromatischen Diaminen. Besonders bevorzugt ist das mindestens eine weitere Diamin ausgewählt aus der Gruppe bestehend aus 1,4-Butandiamin, 1,5-Pentandiamin, 1,6-Hexamethylendiamin, 1,7-Heptamethylendiamin, 1,8-Octamethylendiamin, 1,9-Nonandiamin, 1,10-Decandiamin, 1,11-Undecandiamin, 1,12-Dodecandiamin, 1,13-Tridecandiamin, 1,14-Tetradecandiamin, 1,15-Pentadecandiamin, 1,16-Hexadecandiamin, 1,17-Heptadecandiamin, 1,18-Octadecandiamin, C36-Dimerdiamin, Bis-(4-amino-3-methylcyclohexyl)-methan (MACM), 4,4-Methylen-bis(cyclohexylamin) (PACM), Bis-(4-amino-3-ethyl-cyclohexyl)-methan (EACM), Bis-(4-Amino-3,5-dimethyl-cyclohexyl)methan (TMACM), Isophorondiamin, m-Xylylendiamin, p-Xylylendiamin, 2,5-bis(methylamino)tetrahydrofuran , 2,2-Di-(4-aminophenyl)-propan, 2,2-Di-(4-aminocyclohexyl)-propan, 2,4,4-Trimethylhexamethylendiamin und 1,5-Diamino-2-methyl-pentan.

In einer bevorzugten Ausführungsform haben die Substituenten der Komponente A3) in der Formel (III), der Formel (IV) und der Formel (V) die folgende Bedeutung:
- R³, R⁴, R⁷: sind unabhängig voneinander ausgewählt aus der Gruppe bestehend aus einer Bindung, unsubstituiertem C₁-C₃₆-Alkandiyl und C₆-C₂₀-Arylen;
- R⁵, R⁶: sind unabhängig voneinander ausgewählt aus der Gruppe bestehend aus unsubstituiertem C₁-C₁₀-Alkyl, C₆-C₁₀-Aryl und C₆-C₁₂-Aralkyl.

In einer insbesondere bevorzugten Ausführungsform haben die Substituenten in der Formel (III), der Formel (IV) und der Formel (V) die folgende Bedeutung:
- R³, R⁴, R⁷: sind unabhängig voneinander ausgewählt aus der Gruppe bestehend aus einer Bindung, unsubstituiertem C₁-C₁₂-Alkandiyl und C₆-C₁₀-Arylen;
- R⁵, R⁶: sind unabhängig voneinander ausgewählt aus der Gruppe bestehend aus unsubstituiertem C₁-C₄-Alkyl, C₁-C₁₀-Aryl und C₁-C₁₂-Aralkyl.

Unter "C₁-C₄₀-Alkandiyl", wie es beispielsweise in Formel (III) für R³ beschrieben wurde, wird im Rahmen der vorliegenden Erfindung ein Kohlenwasserstoff mit zwei freien Valenzen und von 1 bis 40 Kohlenstoffatomen verstanden. Anders ausgedrückt ist ein C₁-C₄₀-Alkandiyl ein Biradikal mit 1 bis 40 Kohlenstoffatomen. "C₁-C₄₀-Alkandiyl" umfasst sowohl lineare als auch zyklische sowie gesättigte und ungesättigte Kohlenwasserstoffe mit 1 bis 40 Kohlenstoffatomen und zwei freien Valenzen. Kohlenwasserstoffe, die sowohl eine lineare als auch eine zyklische Komponente aufweisen, fallen ebenfalls unter den Begriff. Entsprechende Ausführungen gelten für C₁-C₃₆-Alkandiyl und C₁-C₁₂-Alkandiyl.

"C₆-C₄₀-Arylen" bezeichnet einen aromatischen Kohlenwasserstoff mit zwei freien Valenzen und von 6 bis 40 Kohlenstoffatomen. Anders ausgedrückt bezeichnet "C₆-C₄₀-Arylen" ein aromatisches Biradikal mit 6 bis 40 Kohlenstoffatomen. Ein C₆-C₄₀-Arylen weist also ein aromatisches Ringsystem auf. Dieses Ringsystem kann monozyklisch, bizyklisch oder polyzyklisch sein. Entsprechende Ausführungen gelten für C₆-C₂₀-Arylen und C₆-C₁₀-Arylen.

"C₁-C₂₀-Alkyl" bezeichnet gesättigte und ungesättigte Kohlenwasserstoffe mit einer freien Valenz (Radikal) und von 1 bis 20 Kohlenstoffatomen. Die Kohlenwasserstoffe können linear, verzweigt oder zyklisch sein. Ebenso ist es möglich, dass sie eine zyklische und eine lineare Komponente enthalten. Beispiele für Alkylgruppen sind Methyl, Ethyl, n-Propyl, Isopropyl, n-Butyl, Isobutyl, sec-Butyl, tert-Butyl, Hexyl und Cyclohexyl. Entsprechende Ausführungen gelten auch für C₁-C₁₀-Alkyl.

"C₆-C₂₀-Aryl" bezeichnet das Radikal eines aromatischen Kohlenwasserstoffs mit 6 bis 20 Kohlenstoffatomen. Ein Aryl weist also ein aromatisches Ringsystem auf. Dieses Ringsystem kann monozyklisch, bizyklisch oder polyzyklisch sein. Beispiele für Arylgruppen sind Phenyl und Naphthyl wie beispielsweise 1-Naphtyl und 2-Naphtyl.

"C₆-C₂₀-Aralkyl" bedeutet vorliegend, dass der Substituent ein Alkyl ist, das wiederum durch ein Aryl substituiert ist. Anders ausgedrückt beschreibt Aralkyl ein Alkandiyl, das durch ein Arylradikal substituiert ist. Ein C₆-C₂₀-Aralkyl ist ein Aralkyl, das 6 bis 20 Kohlenstoffatome enthält. Das Arylradikal kann beispielsweise ein Aryl sein wie oben definiert. Beispiele für Aralkyl sind beispielsweise Phenylmethyl (Benzyl) oder Phenylethyl.

In einer weiteren bevorzugten Ausführungsform ist das mindestens eine Dicarbonsäurederivat (Komponente A3)) ausgewählt aus der Gruppe bestehend aus einer Dicarbonsäure der allgemeinen Formel (III) und einem Dicarbonsäureester der allgemeinen Formel (IV).

Für die Dicarbonsäure (III) und den Dicarbonsäureester (IV) gelten dann die zuvor beschriebenen Ausführungen und Bevorzugungen entsprechend.

In einer weiteren bevorzugten Ausführungsform ist die Dicarbonsäure (III) ausgewählt aus der Gruppe bestehend aus Oxalsäure (Ethandisäure), Malonsäure (Propandisäure), Bernsteinsäure (Butandisäure), Glutarsäure (Pentandisäure), Adipinsäure (Hexandisäure), Pimelinsäure (Heptandisäure), Korksäure (Octandisäure), Azelainsäure (Nonandisäure), Sebacinsäure (Decandisäure), 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, 1,3-Cyclohexandicarbonsäure, 1,4-Cyclohexandicarbonsäure, Isophthalsäure, Terephthalsäure, Naphtalendicarbonsäure, C36-Dimersäure, 2,5-Tetrahydrofurandicarbonsäure, 2,5-Furandicarbonsäure, 5-Sulfoisophtalsäure-mono-Natriumsalz und 5-Sulfoisophtalsäure-mono-Lithiumsalz.

In einer weiteren insbesondere bevorzugten Ausführungsform ist die Dicarbonsäure (III) ausgewählt aus der Gruppe bestehend aus Adipinsäure (Hexandisäure), Pimelinsäure (Heptandisäure), Korksäure (Octandisäure), Azelainsäure (Nonandisäure), Sebacinsäure (Decandisäure), 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, 2,5-Tetrahydrofurandicarbonsäure, 1,3-Cyclohexandicarbonsäure, 1,4-Cyclohexandicarbonsäure, Isophthalsäure, Terephthalsäure, Naphtalendicarbonsäure und C36-Dimersäure.

"Mindestens ein Endgruppenregler" bedeutet im Rahmen der vorliegenden Erfindung sowohl genau einen Endgruppenregler als auch eine Mischung aus zwei oder mehr Endgruppenreglern .

Endgruppenregler sind dem Fachmann als solche bekannt.

Es besteht die Vorstellung, dass der Endgruppenregler mit dem Polyamid (P), insbesondere mit den Aminendgruppen des Polyamids (P) reagiert, wodurch eine Umamidierung verhindert werden kann.

Geeignete Endgruppenregler sind beispielsweise Monocarbonsäuren, Monoamine, Benzolmonocarbonsäuren, Naphthalinmonocarbonsäuren, Benzolmonoamine, Naphthalinmonoamine oder Disäuren oder Anhydride, die mit Aminen Imide bilden.

Bevorzugt ist der mindestens eine Endgruppenregler ausgewählt aus der Gruppe bestehend aus Propionsäure, Benzoesäure, Naphthoesäure und Bernsteinsäureanhydrid.

Gegenstand der vorliegenden Erfindung ist somit auch ein Verfahren, bei dem der mindestens eine Endruppenregler ausgewählt ist aus der Gruppe bestehend aus Propionsäure, Benzoesäure, Naphthoesäure und Bernsteinsäureanhydrid.

Die Polymerisation aus der Reaktionsmischung (RM) kann nach allen dem Fachmann bekannten Methoden erfolgen. Bevorzugt erfolgt, die Polymerisation bei einer Reaktionstemperatur T_{R}, die oberhalb der Schmelztemperatur T_{M} des Polyamids (P) liegt. Beispielsweise liegt die Reaktionstemperatur T_{R} im Bereich von 190 bis 235 °C, bevorzugt im Bereich von 195 bis 230 °C und insbesondere bevorzugt im Bereich von 200 bis 220°C.

Das Polyamid (P) weist im Allgemeinen eine Viskositätszahl von 30 bis 250 ml/g auf, bevorzugt von 90 bis 220 ml/g und insbesondere bevorzugt im Bereich von 100 bis 130 ml/g. Die Bestimmung der Viskositätszahl erfolgt in einer Lösung von 0,5 g Polyamid (P) in 100 ml einer 1 : 1 Mischung von Phenol und o-Dichlorbenzol.

Das gewichtsmittlere Molekulargewicht (M_{W}) des Polyamids (P) liegt üblicherweise im Bereich von 20 000 bis 150 000 g/mol, bevorzugt im Bereich von 30 000 bis 140 000 g/mol und insbesondere bevorzugt im Bereich von 35 000 bis 120 000 g/mol, bestimmt mittels Gelpermeationschromatographie (GPC) (size exclusion chromatography (SEC)). Als Lösungsmittel wurde Hexafluoroisopropanol (HFIP) verwendet.

Das zahlenmittlere Molekulargewicht (Mₙ) des Polyamids (P) liegt üblicherweise im Bereich von 5 000 bis 75 000 g/mol, bevorzugt im Bereich von 15 000 bis 70 000 g/mol und insbesondere bevorzugt im Bereich von 17 500 bis 60 000 g/mol, bestimmt mittels Gelpermeationschromatographie (GPC) (size exclusion chromatography (SEC)). Als Lösungsmittel wurde Hexafluorisopropanol (HFIP) verwendet.

Die Schmelztemperatur T_{M} des Polyamids (P) liegt üblicherweise im Bereich von 80 bis 330°C, bevorzugt im Bereich von 150 bis 250 °C und insbesondere bevorzugt im Bereich von 180 bis 230 °C, bestimmt durch dynamische Differenzkalorimetrie (differential scanning calorimetry; DSC) oder durch dynamisch-mechanische Thermoanalyse (DMTA) für semikristalline Polyamide. Für amorphe Polyamide ist T_{M} definiert als die Temperatur, bei der das Polyamid (P) (mit einer Mindestlösungsviskosität von 80 mL/g nach ISO307 in Schwefelsäure) mindestens eine Nullscherviskosität (zero shear viscosity) von 5000 Pa s aufweist und damit in der Schmelze verarbeitbar ist (gemessen auf einem Rotationsrheometer "DHR-1" der Firma TA-instruments, Platte-Platte Geometrie, Plattendurchmesser 25 mm und Probenhöhe 1,0 mm. Deformation 1,0 %, Vorheizzeit 1,5 min und Material vorher 7 Tage bei 80°C im Vakuum getrocknet).

Gegenstand der vorliegenden Erfindung ist somit auch ein Verfahren, bei dem die Schmelztemperatur T_{M} des Polyamids (P) im Bereich von 80 bis 330°C liegt.

Das Polyamid (P) weist üblicherweise eine Glasübergangstemperatur T_{G} auf. Die Glasübergangstemperatur T_{G} des Polyamids (P) liegt üblicherweise im Bereich von 0 bis 150°C, bevorzugt im Bereich von 20 bis 100°C und insbesondere bevorzugt im Bereich von 40 bis 80°C, bestimmt durch DSC.

Gegenstand der vorliegenden Erfindung ist somit auch ein Verfahren, bei dem die Glasübergangstemperatur T_{G} des Polyamids (P) im Bereich von 0 bis 150°C liegt.

Das Formteil (F) kann in Schritt i) nach allen dem Fachmann bekannten Methoden bereitgestellt werden. Geeignete Methoden sind beispielsweise Spritzguss, Extrusion, Kalandrieren, Rotationsformen und Blasformen, bevorzugte Methoden sind Spritzguss und/oder Extrusion.

### Schritt ii)

In Schritt ii) wird die Oberfläche (O) des in Schritt i) bereitgestellten Formteils (F) mit einer dienophilhaltigen Lösung (dL) unter Erhalt des oberflächenfunktionalisierten Formteils (oF) in Kontakt gebracht. Die dienophilhaltige Lösung (dL) enthält mindestens ein Dienophil. Das mindestens eine Dienophil enthält mindestens eine Dienophileinheit, die gegenüber den im Polyamid (P) enthaltenen Dieneinheiten (I) reaktiv ist.

In einer bevorzugten Ausführungsform enthält die dienophilhaltige Lösung (dL) mindestens ein Lösungsmittel (LM). Die dienophilhaltige Lösung (dL) enthält dann also mindestens ein Lösungsmittel (LM) und mindestens ein Dienophil.

Gegenstand der vorliegenden Erfindung ist somit auch ein Verfahren, bei dem die dienophilhaltige Lösung (dL) mindestens ein Lösungsmittel (LM) enthält.

In Schritt ii) kann die gesamte Oberfläche (O) des Formteils (F) mit der dienophilhaltigen Lösung (dL) in Kontakt gebracht werden. Diese Ausführungsform ist bevorzugt. Darüber hinaus ist es möglich, dass nur ein Teil der Oberfläche (O) des Formteils (F) mit der dienophilhaltigen Lösung (dL) in Kontakt gebracht wird, beispielsweise im Bereich von 1 bis 99 % der Oberfläche (O), bezogen auf die gesamte Oberfläche (O).

Das Inkontaktbringen der Oberfläche (O) mit der dienophilhaltigen Lösung (dL) kann nach allen dem Fachmann bekannten Methoden erfolgen, beispielsweise indem zumindest die Oberfläche (O) des Formteils (F) in die dienophilhaltige Lösung (dL) getaucht wird oder indem die dienophilhaltige Lösung (dL) auf die Oberfläche (O) aufgetragen wird durch Sprühen, Walzen, Rakeln oder Pinseln. Verfahren hierzu sind dem Fachmann bekannt. Bevorzugt wird die Oberfläche (O) mit der dienophilhaltigen Lösung (dL) in Kontakt gebracht, indem zumindest die Oberfläche (O) des Formteils (F) in die dienophilhaltige Lösung (dL) getaucht wird.

Die dienophilhaltige Lösung (dL) enthält beispielsweise im Bereich von 0 bis 99,5 Gew.-% des mindestens einen Lösungsmittels (LM) und im Bereich von 0,5 bis 100 Gew.-% des mindestens einen Dienophils, jeweils bezogen auf die Summe der Gewichtsprozente des mindestens einen Lösungsmittels (LM) und des mindestens einen Dienophils, bevorzugt bezogen auf das Gesamtgewicht der dienophilhaltigen Lösung (dL).

Bevorzugt enthält die dienophilhaltige Lösung (dL) im Bereich von 70 bis 98 Gew.-% des mindestens einen Lösungsmittels (LM) und im Bereich von 2 bis 30 Gew.-% des mindestens einen Dienophils, jeweils bezogen auf die Summe der Gewichtsprozente des mindestens einen Lösungsmittels (LM) und des mindestens einen Dienophils, bevorzugt bezogen auf das Gesamtgewicht der dienophilhaltigen Lösung (dL).

Besonders bevorzugt enthält die dienophilhaltige Lösung (dL) im Bereich von 90 bis 97 Gew.-% des mindestens einen Lösungsmittels (LM) und im Bereich von 3 bis 10 Gew.-% des mindestens einen Dienophils, jeweils bezogen auf die Summe der Gewichtsprozente des mindestens einen Lösungsmittels (LM) und des mindestens einen Dienophils, bevorzugt bezogen auf das Gesamtgewicht der dienophilhaltigen Lösung (dL).

Gegenstand der vorliegenden Erfindung ist somit auch ein Verfahren, bei dem die dienophilhaltige Lösung (dL) im Bereich von 0 bis 99,5 Gew.-% des mindestens einen Lösungsmittels (LM) und im Bereich von 0,5 bis 100 Gew.-% des mindestens einen Dienophils enthält, jeweils bezogen auf das Gesamtgewicht der dienophilhaltigen Lösung (dL).

Als das in der dienophilhaltigen Lösung (dL) bevorzugt enthaltene mindestens eine Lösungsmittel (LM) eignen sich alle dem Fachmann bekannten Lösungsmittel, in denen das Polyamid (P), das in der Oberfläche (O) enthalten ist, unlöslich ist und in dem das mindestens eine Dienophil löslich ist. Bevorzugt ist das mindestens eine Lösungsmittel (LM) ein nicht nucleophiles Lösungsmittel. Derartige Lösungsmittel sind dem Fachmann bekannt.

Als das mindestens eine Lösungsmittel (LM) eignen sich beispielsweise aprotisch-polare Lösungsmittel, aprotisch-unpolare Lösungsmittel, protische Lösungsmittel sowie Mischungen daraus.

Geeignete aprotisch-polare Lösungsmittel sind beispielsweise Aceton, Acetonitril, N-Methyl-2-pyrrolidon, Dimethylformamid und Dimethylsulfoxid.

Geeignete aprotisch-unpolare Lösungsmittel sind beispielsweise Hexan, Toluol, Diethylether, Tetrahydrofuran, Methylenchlorid, Chloroform und 1,2-Dichlorbenzol.

Geeignete protische Lösungsmittel sind beispielsweise Wasser, Methanol, Ethanol und Isopropanol,

Bevorzugt ist das mindestens eine Lösungsmittel (LM) ausgewählt aus der Gruppe bestehend aus Aceton, Acetonitril, N-Methyl-2-pyrrolidon, Dimethylformamid, Dimethylsulfoxid, Hexan, Toluol, Diethylether, Tetrahydrofuran, Methylenchlorid, Chloroform, 1,2-Dichlorbenzol, Wasser, Methanol, Ethanol und Isopropanol. Insbesondere bevorzugt ist das mindestens eine Lösungsmittel (LM) ausgewählt aus der Gruppe bestehend aus Toluol, Tetrahydrofuran, Wasser, Methanol, Ethanol und Isopropanol.

Gegenstand der vorliegenden Erfindung ist daher auch ein Verfahren, bei dem das mindestens eine Lösungsmittel (LM) ausgewählt ist aus der Gruppe bestehend aus Aceton, Acetonitril, N-Methyl-2-pyrrolidon, Dimethylformamid, Dimethylsulfoxid, Hexan, Toluol, Diethylether, Tetrahydrofuran, Methylenchlorid, Chloroform, 1,2-Dichlorbenzol, Wasser, Methanol, Ethanol und Isopropanol.

Erfindungsgemäß enthält die dienophilhaltige Lösung (dL) mindestens ein Dienophil, das mindestens eine Dienophileinheit enthält, die gegenüber den in dem Polyamid (P) enthaltenen Dieneinheiten (I) reaktiv ist.

"Mindestens ein Dienophil" bedeutet im Rahmen der vorliegenden Erfindung sowohl genau ein Dienophil als auch eine Mischung aus zwei oder mehr Dienophilen.

"Mindestens eine Dienophileinheit, die gegenüber den in dem Polyamid (P) enthaltenen Dieneinheiten (I) reaktiv ist" bedeutet, dass das mindestens eine Dienophil sowohl genau eine Dienophileinheit enthalten kann, ebenso kann es zwei oder mehr Dienophileinheiten enthalten. Erfindungsgemäß bevorzugt enthält das mindestens eine Dienophil genau eine Dienophileinheit, die gegenüber den in dem Polyamid (P) enthaltenen Dieneinheiten reaktiv ist.

Gegenstand der vorliegenden Erfindung ist somit auch ein Verfahren, bei dem das in der dienophilhaltigen Lösung (dL) enthaltene mindestens eine Dienophil genau eine Dienophileinheit enthält.

Unter "Dienophileinheit, die gegenüber den in dem Polyamid (P) enthaltenen Dieneinheit (I) reaktiv ist" wird verstanden, dass die in dem Dienophil enthaltene Dienophileinheit mit den Dieneinheiten (I) des Polyamids (P) in einer [4+2]-Cycloaddition reagieren kann. Derartige Gruppen und die entsprechenden Dienophile sind dem Fachmann als solche bekannt. Die Dieneinheit (I) des Polyamids (P) fungiert dabei als Dienkomponente, die 4 π-Elektronen zur [4+2]-Cycloaddition beisteuert. Die Dienophileinheit des Dienophils steuert 2 π-Elektronen zur [4+2]-Cycloaddition bei.

Jeweils eine Dieneinheit (I) des Polyamids (P) kann somit mit jeweils einer Dienophileinheit des in der dienophilhaltigen Lösung (dL) enthaltenen Dienophils eine [4+2]-Cycloaddition eingehen.

Gegenstand der vorliegenden Erfindung ist somit auch ein Verfahren, bei dem in Schritt ii) die in dem mindestens einen Dienophil enthaltene mindestens eine Dienophileinheit mit den in Polyamid (P) enthaltenen Dieneinheiten (I) in einer [4+2]-Cycloaddition reagiert unter Erhalt des oberflächenfunktionalisierten Formteils (oF).

Bevorzugt ist die in dem Dienophil enthaltene mindestens eine Dienophileinheit, die gegenüber den in dem Polyamid (P) enthaltenen Dieneinheiten (I) (Furaneinheiten) reaktiv ist, ausgewählt aus der Gruppe bestehend aus C=C-Doppelbindungen, C=O-Doppelbindungen und C=S-Doppelbindungen.

Gegenstand der vorliegenden Erfindung ist somit auch ein Verfahren, bei dem die in dem mindestens einen Dienophil enthaltene mindestens eine Dienophileinheit ausgewählt ist aus der Gruppe bestehend aus C=C-Doppelbindungen, C=O-Doppelbindungen und C=S-Doppelbindungen.

In einer insbesondere bevorzugten Ausführungsform ist die in dem Dienophil enthaltene mindestens eine Dienophileinheit eine C=C-Doppelbindung.

In einer weiteren bevorzugten Ausführungsform umfasst das Dienophil mindestens eine Dienophileinheit, die ausgewählt ist aus der Gruppe bestehend aus C=C-Doppelbindungen, C=O-Doppelbindungen und C=S-Doppelbindungen, wobei die Doppelbindungen elektronenziehende Substituenten enthalten.

Elektronenziehende Substituenten sind dem Fachmann als solche bekannt. Beispiele für elektronenziehende Substituenten sind beispielsweise Carboxylgruppen, Estergruppen, Amide, Nitrile, Nitrogruppen, substituierte Aryle, Fluoralkyle und Fluor.

Dem Fachmann ist bekannt, dass durch die elektronenziehenden Substituenten die Reaktivität der Dienophileinheit des Dienophils gegenüber den Furaneinheiten erhöht wird.

In einer insbesondere bevorzugten Ausführungsform der vorliegenden Erfindung enthält das in der dienophilhaltigen Lösung (dL) enthaltene mindestens eine Dienophil mindestens eine Dienophileinheit, die ausgewählt ist aus der Gruppe bestehend aus Maleimid, Benzophenon, Acrylaten, Methacrylaten, Acrylonitrilen, Maleinsäure, Maleinsäureanhydrid und Maleinsäureestern.

Gegenstand der vorliegenden Erfindung ist somit auch ein Verfahren, bei dem das in der dienophilhaltigen Lösung (dL) enthaltene mindestens eine Dienophil mindestens eine Struktureinheit ausgewählt aus der Gruppe bestehend aus Maleimiden, Benzophenon, Acrylaten, Methacrylaten, Acrylonitrilen, Maleinsäure, Maleinsäureanhydrid und Maleinsäureestern enthält.

Es ist außerdem bevorzugt, dass das mindestens eine Dienophil als mindestens eine Dienophileinheit kein Isocyanat und keine Carbonsäure enthält. Bevorzugt ist die mindestens eine Dienophileinheit also kein Isocyanat und keine Carbonsäure.

Gegenstand der vorliegenden Erfindung ist somit auch ein Verfahren, bei dem die in dem mindestens einen Dienophil enthaltene Dienophileinheit kein Isocyanat und keine Carbonsäure ist.

In einer bevorzugten Ausführungsform enthält das in der dienophilhaltigen Lösung (dL) enthaltene mindestens eine Dienophil mindestens eine weitere funktionelle Einheit.

"Mindestens eine weitere funktionelle Einheit" bedeutet im Rahmen der vorliegenden Erfindung sowohl genau eine weitere funktionelle Einheit als auch zwei oder mehr weitere funktionelle Einheiten.

Unter einer "funktionellen Einheit" wird eine funktionelle Gruppe verstanden, die mit der in dem weiter unten beschriebenen Funktionalisierungsmittel (FM) enthaltenen reaktiven Einheit eine Reaktion eingehen kann, durch die das Funktionalisierungsmittel (FM) an das Dienophil addiert wird.

Gegenstand der vorliegenden Erfindung ist somit auch ein Verfahren, bei dem das in der dienophilhaltigen Lösung (dL) enthaltene mindestens eine Dienophil mindestens eine weitere funktionelle Einheit enthält.

In einer Ausführungsform der vorliegenden Erfindung ist die mindestens eine weitere funktionelle Einheit von der in dem mindestens einen Dienophil enthaltenen mindestens einen Dienophileinheit verschieden. Diese Ausführungsform ist bevorzugt.

Darüber hinaus ist es möglich, dass die mindestens eine Dienophileinheit und die mindestens eine weitere funktionelle Einheit gleich sind. Beispielsweise kann das mindestens eine Dienophil genau zwei Dienophileinheiten enthalten, wobei eine der Dienophileinheiten mit der in dem Polyamid (P) enthaltenen Dieneinheit (I) reagiert und die zweite der Dienophileinheiten nicht mit der in dem Polyamid (P) enthaltenen Dieneinheit (I) reagiert. Die zweite der Dienophileinheiten ist dann die weitere funktionelle Einheit.

Als mindestens eine weitere funktionelle Einheit eignen sich alle dem Fachmann bekannten funktionellen Einheiten.

Bevorzugt ist die mindestens eine weitere funktionelle Einheit, die in dem mindestens einen Dienophil enthalten ist, ausgewählt aus der Gruppe bestehend aus Anhydriden, Imiden, Estern, Carbonsäuren, Aminen, Alkoholen, Thiolen und Isocyanaten.

Gegenstand der vorliegenden Erfindung ist somit auch ein Verfahren, bei dem das mindestens eine Dienophil als mindestens eine weitere funktionelle Einheit eine funktionelle Einheit ausgewählt aus der Gruppe bestehend aus Anhydriden, Imiden, Estern, Carbonsäuren, Aminen, Alkoholen, Thiolen und Isocyanaten enthält.

Ist das Dienophil beispielsweise Maleinsäureanhydrid, so entspricht die darin enthaltene C=C-Doppelbindung der Dienophileinheit, die Anhydrid-Gruppe entspricht der mindestens einen weiteren funktionellen Einheit. Entsprechendes gilt beispielsweise für Maleimid. Darin entspricht die C=C-Doppelbindung der Dienophileinheit, die Imidgruppe entsprich der mindestens einen weiteren funktionellen Einheit.

Schritt ii) kann bei beliebiger Temperatur und bei beliebigem Druck durchgeführt werden. Vorzugsweise wird Schritt ii) bei einer Temperatur, die unterhalb des Siedepunktes des in der dienophilhaltigen Lösung (dL) enthaltenen mindestens einen Lösungsmittels (LM) und/oder unterhalb der Schmelztemperatur des in der Oberfläche (O) enthaltenen Polyamids (P) liegt, durchgeführt.

Beispielsweise liegt die Temperatur in Schritt ii) im Bereich von 15 bis 150 °C, bevorzugt im Bereich von 20 bis 100 °C und insbesondere bevorzugt im Bereich von 23 bis 60 °C.

Der Druck in Schritt ii) liegt beispielsweise im Bereich von 0,5 bis 1,5 bar, bevorzugt im Bereich von 0,8 bis 1,2 bar und insbesondere bevorzugt im Bereich von 0,9 bis 1,1 bar.

Gegenstand der vorliegenden Erfindung ist somit auch ein Verfahren, bei dem Schritt ii) bei einer Temperatur im Bereich von 15 bis 150°C durchgeführt wird.

Das oberflächenfunktionalisierte Formteil (oF), das die funktionalisierte Oberfläche (fO) aufweist, wird vorzugsweise dadurch erhalten, dass die Dieneinheit (I) des in der Oberfläche (O) enthaltenen Polyamids (P) mit der Dienophileinheit des in der dienophilhaltigen Lösung (dL) enthaltenen mindestens einen Dienophil in einer [4+2]-Cycloaddition reagiert. [4+2]-Cycloadditionen sind dem Fachmann als solche bekannt. Sie werden auch als Diels-Alder-Reaktionen bezeichnet.

Bei der [4+2]-Cycloaddition wird das Dienophil mit seiner gegenüber den in dem Polyamid (P) enthaltenen Furaneinheiten reaktiven Dienophileinheit, also vorzugsweise mit der C=C-Doppelbindung, der C=O-Doppelbindung oder der C=S-Doppelbindung, an die Furaneinheit (Dieneinheit) addiert. Dadurch bildet sich ein Cyclohexenderivat. Diese Reaktion ist dem Fachmann als solche bekannt.

Somit enthält die funktionalisierte Oberfläche (fO) Cyclohexenderivateinheiten.

Dem Fachmann ist bekannt, dass die [4+2]-Cycloaddition reversibel ist. Diese Reaktion wird als Retro-Diels-Alder-Reaktion bezeichnet. Die Temperaturen, bei der die Retro-Diels-Alder-Reaktion stattfindet, sind von der Art des mindestens einen Dienophils abhängig. Bevorzugt wird Schritt ii) bei einer Temperatur, die unterhalb der Temperatur, bei der die Retro-Diels-Alder-Reaktion stattfindet, durchgeführt.

Bei der Reaktion der Dienophileinheiten des mindestens einen Dienophils mit den Dieneinheiten (I) des Polyamids (P) kann jede der im Polyamid (P) enthaltenen Dieneinheiten (I) mit jeweils einer Dienophileinheit reagieren. Ebenso ist es möglich, dass nur ein Teil der in dem Polyamid (P) enthaltenen Dieneinheiten (I) mit den Dienophileinheiten des mindestens einen Dienophils reagiert.

Es versteht sich von selbst, dass die funktionalisierte Oberfläche (fO) an den Stellen gebildet wird, an denen die Oberfläche (O) des Formteils (F) mit der dienophilhaltigen Lösung (dL) in Kontakt gebracht wird.

Die Form des Formteils (F) bleibt während der Reaktion der Dienophileinheiten mit den Dieneinheiten (I) im makroskopischen Maßstab unverändert. Somit weist das oberflächenfunktionalisierte Formteil (oF) die gleiche makroskopische Form wie das Formteil (F) auf. Für das oberflächenfunktionalisierte Formteil (oF) gelten daher makroskopisch die Ausführungen und Bevorzugungen, wie sie zuvor für das Formteil (F) beschrieben worden sind, entsprechend.

Es versteht sich von selbst, dass durch die Reaktion des in der Oberfläche (O) enthaltenen Polyamids (P) die Oberfläche (O) verändert wird unter Erhalt der funktionalisierten Oberfläche (fO). Daher wird die Form des Formteils auf molekularer Ebene verändert. Die Dicke der Oberfläche (O) nimmt bei Ausbildung der funktionalisierten Oberfläche (fO) um die Länge der Dienophil-Moleküle sowie gegebenenfalls die Länge der Moleküle des Funktionalisierungsmittels (FM) zu. Die funktionalisierte Oberfläche (fO) weist also eine größere Dicke als die nicht funktionalisierte Oberfläche (die Oberfläche (O)) auf.

In einer erfindungsgemäßen Ausführungsform wird im Anschluss an Schritt ii) folgender Schritt durchgeführt.
iii) Inkontaktbringen der funktionalisierten Oberfläche (fO) des in Schritt ii) erhaltenen oberflächenfunktionalisierten Formteils (oF) mit mindestens einem Funktionalisierungsmittel (FM), das mindestens eine reaktive Einheit, die gegenüber der in dem mindestens einen Dienophil enthaltenden mindestens einen weiteren funktionellen Einheit reaktiv ist, enthält.

Gegenstand der vorliegenden Erfindung ist somit auch ein Verfahren, bei dem
im Anschluss an Schritt ii) der folgende Schritt durchgeführt wird:
iii) Inkontaktbringen der funktionalisierten Oberfläche (fO) des in Schritt ii) erhaltenen oberflächenfunktionalisierten Formteils (oF) mit mindestens einem Funktionalisierungsmittel (FM), das mindestens eine reaktive Einheit, die gegenüber der in dem mindestens einen Dienophil enthaltenen mindestens einen weiteren funktionellen Einheit reaktiv ist, enthält.

Das Inkontaktbringen der funktionalisierten Oberfläche (fO) des in Schritt ii) erhaltenen oberflächenfunktionalisierten Formteils (oF) mit dem mindestens einen Funktionalisierungsmittel (FM) kann nach allen dem Fachmann bekannten Methoden erfolgen. Beispielsweise kann das Inkontaktbringen erfolgen, indem die funktionalisierte Oberfläche (fO) in das Funktionalisierungsmittel (FM) getaucht wird oder indem das Funktionalisierungsmittel (FM) auf die funktionalisierte Oberfläche (fO) aufgebracht wird durch Sprühen, Walzen, Rakeln oder Pinseln. Verfahren hierzu sind dem Fachmann bekannt. Bevorzugt wird die funktionalisierte Oberfläche (fO) mit dem Funktionalisierungsmittel (FM) in Kontakt gebracht, indem die funktionalisierte Oberfläche (fO) in das Funktionalisierungsmittel (FM) getaucht wird.

Das mindestens eine Funktionalisierungsmittel (FM) kann als solches eingesetzt werden. Ebenso ist es möglich, dass eine Lösung des mindestens einen Funktionalisierungsmittels (FM) eingesetzt wird. Geeignete Lösungsmittel sind dem Fachmann bekannt und sind vorzugsweise Lösungsmittel, in denen die funktionalisierte Oberfläche (fO) unlöslich ist, und das mindestens eine Funktionalisierungsmittel (FM) löslich.

Geeignete Lösungsmittel sind beispielsweise ausgewählt aus der Gruppe bestehend aus Aceton, Acetonitril, N-Methyl-2-pyrroldion, Dimethylformamid, Dimethylsulfoxid, Hexan, Toluol, Diethylether, Tetrahydrofuran, Methylenchlorid, Chloroform, 1,2-Dichlorbenzol, Wasser, Methanol, Ethanol, Isopropanol und Mischungen daraus.

Wird eine Lösung des mindestens einen Funktionalisierungsmittels (FM) eingesetzt, so enthält die Lösung beispielsweise im Bereich von 0 bis 99,5 Gew.-% des Lösungsmittels und im Bereich von 0,5 bis 100 Gew.-% des Funktionalisierungsmittels (FM), bevorzugt im Bereich von 70 bis 98 Gew.-% des Lösungsmittels und im Bereich von 2 bis 30 Gew.-% des Funktionalisierungsmittels (FM), jeweils bezogen auf die Summe der Gewichtsprozente des Lösungsmittels und des Funktionalisierungsmittels (FM), bevorzugt bezogen auf das Gesamtgewicht der Lösung.

Das mindestens eine Funktionalisierungsmittel (FM) enthält mindestens eine reaktive Einheit, die gegenüber der in dem mindestens einen Dienophil enthaltenen mindestens einen weiteren funktionellen Einheit reaktiv ist.

Es versteht sich von selbst, dass das mindestens eine Funktionalisierungsmittel (FM) von dem mindestens einen Dienophil verschieden ist.

Bevorzugt ist die in dem mindestens einen Funktionalisierungsmittel (FM) enthaltene mindestens eine reaktive Einheit ausgewählt aus der Gruppe bestehend aus Aminen, Alkoholen, Thiolen, Isocyanaten, Carbonsäuren und Anhydriden.

Gegenstand der vorliegenden Erfindung ist somit auch ein Verfahren, bei dem die in dem mindestens einen Funktionalisierungsmittel (FM) enthaltene mindestens eine reaktive Einheit ausgewählt ist aus der Gruppe bestehend aus Aminen, Alkoholen, Thiolen, Isocyanaten, Carbonsäuren und Anhydriden.

Bei Inkontaktbringen der funktionalisierten Oberfläche (fO) des in Schritt ii) erhaltenen oberflächenfunktionalisierten Formteils (oF) mit dem mindestens einen Funktionalisierungsmittel (FM) geht die mindestens eine reaktive Einheit, die in dem Funktionalisierungsmittel (FM) enthalten ist, mit der in dem Dienophil enthaltenen mindestens einen weiteren funktionellen Einheit eine Reaktion ein. Dabei wird die funktionalisierte Oberfläche (fO) weiter funktionalisiert. Diese Reaktionen sind dem Fachmann als solche bekannt. Enthält das Dienophil als weitere funktionelle Einheit beispielsweise eine Anhydridgruppe und das Funktionalisierungsmittel (FM) als reaktive Einheit ein Amin, so bildet sich bei der Reaktion der weiteren funktionellen Einheit mit der reaktiven Einheit ein Amid. Dieses Amid kann dann bei höheren Temperaturen zu einem Imid reagieren. Diese Reaktion ist dem Fachmann bekannt.

Gegenstand der vorliegenden Erfindung ist außerdem ein oberflächenfunktionalisiertes Formteil (oF), erhältlich nach dem erfindungsgemäßen Verfahren.

Nachfolgend wird die vorliegende Erfindung anhand von Beispielen näher erläutert, ohne sie hierauf zu beschränken.

### Beispiele

Zur Messung des Kontaktwinkels wurden die erhaltenen Pulver auf eine flache Glasoberfläche aufgebracht und der Kontaktwinkel von Wassertropfen auf den Pulvern mit einem Krüss DA 100 bestimmt. Dazu wurde mit doppelseitigem Klebeband auf einen Glasobjektträger eine Pulverschicht hergestellt. Zur Bestimmung des Kontaktwinkels wurden ca. 2 µl große Tropfen aus entionisiertem Wasser auf die Pulverschicht aufgesetzt und bei 23 °C vermessen.

### Vergleichsbeispiel 1

Ein Granulat von PA6/F6 (80/20) (W/W), Copolymer aus Caprolactam (80 Gew.-%) mit 2,5-Bis(aminomethyl)furan und Adipinsäure (zusammen 20 Gew.-%) wurde unter flüssigem Stickstoff in einer Cryomühle Retsch ZM 200 gemahlen und anschließend gesiebt unter Erhalt eines Pulvers mit einer Partikelgröße von < 500 µm. Das Pulver wurde bei 80°C in einem Vakuumofen getrocknet. Der Kontaktwinkel lag bei 112,9°.

### Beispiel 2

5g des Pulvers aus Vergleichsbeispiel 1 wurde in einer 0,1-molaren Lösung von 1,1'-(Methylendi-4,1-phenylen)bismaleimid-Lösung in Toluol (dienophilhaltige Lösung (dL)) für 24 Stunden suspendiert und darin gerührt. Anschließend wurde das Pulver filtriert und fünf Mal mit Toluol gewaschen und filtriert. Anschließend wurde das Pulver im Vakuumofen bei 80°C für 24 Stunden getrocknet. Der Kontaktwinkel lag bei 103,8° .

### Beispiel 3

10 g des Pulvers aus Vergleichsbeispiel 1 wurde in einer 1-molaren Lösung von Maleinsäureanhydrid-Lösung in Toluol (dienophilhaltige Lösung (dL)) für 24 Stunden suspendiert und darin gerührt. Anschließend wurde das Pulver filtriert und fünf Mal mit Toluol gewaschen und filtriert. Anschließend wurde das Pulver im Vakuumofen bei 80°C für 24 Stunden getrocknet.

### Beispiel 4

5g des in Beispiel 3 erhaltenen Pulvers wurden in einer 1-molaren Lösung von 1-Octadecylamin in Toluol (Lösung des Funktionalisierungsmittels (FM)) suspendiert und dann für 24 Stunden gerührt. Das erhaltene Pulver wurde filtriert und fünf Mal mit Toluol gewaschen und erneut filtriert. Anschließend wurde das erhaltene Pulver in Vakuum bei 80°C für 24 Stunden getrocknet. Der Kontaktwinkel lag bei 123,6°.

### Beispiel 5

5 g des in Beispiel 3 erhaltenen Pulvers wurde für 24 Stunden in Wasser suspendiert und darin gerührt. Anschließend wurde das Pulver filtriert und anschließend im Vakuumofen bei 80°C für 48 Stunden getrocknet. Der Kontaktwinkel lag bei 71,2°.

Anhand des Vergleichs der Kontaktwinkel für die verschiedenen in den Beispielen erhaltenen Pulver ist deutlich zu erkennen, dass durch die Reaktion mit einem Dienophil die Oberfläche von PA6/F6 hydrophob oder hydrophil modifiziert werden kann. Bei Behandlung des PA6/F6-Pulvers mit Maleinsäureanhydrid und anschließender Umsetzung des erhaltenen Produkts mit 1-Aminooctadecan (Beispiel 4) wird der Kontaktwinkel deutlich erhöht, was zeigt, dass die Oberfläche hydrophober wird. Im Gegensatz dazu wird bei Reaktion des Polyamidpulver mit Maleinsäureanhydrid und anschließend Wasser der Kontaktwinkel signifikant erniedrigt, was auf eine höhere Hydrophilie des Polyamids zurückzuführen ist.

## Patentansprüche

1. Verfahren zur Herstellung eines oberflächenfunktionalisierten Formteils (oF), das eine funktionalisierte Oberfläche (fO) aufweist, umfassend die Schritte
i) Bereitstellen eines Formteils (F), das eine Oberfläche (O) aufweist, die ein Polyamid (P) enthält, wobei das Polyamid (P) Dieneinheiten der allgemeinen Formel (I) 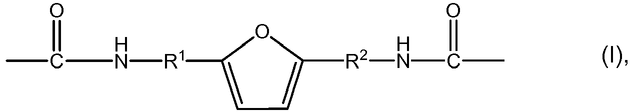 in der
R¹, R² unabhängig voneinander ausgewählt sind aus C₁-C₁₀-Alkandiyl, enthält,
ii) Inkontaktbringen der Oberfläche (O) des in Schritt i) bereitgestellten Formteils (F) mit einer dienophilhaltigen Lösung (dL), die mindestens ein Dienophil enthält, wobei das mindestens eine Dienophil mindestens eine Dienophileinheit, die gegenüber den im Polyamid (P) enthaltenen Dieneinheiten (I) reaktiv ist, enthält, unter Erhalt des oberflächenfunktionalisierten Formteils (oF), das die funktionalisierte Oberfläche (fO) aufweist.

2. Verfahren gemäß Anspruch 1, **dadurch gekennzeichnet, dass** in Schritt ii) die in dem mindestens einen Dienophil enthaltene mindestens eine Dienophileinheit mit den in Polyamid (P) enthaltenen Dieneinheiten (I) in einer [4+2]-Cycloaddition reagiert unter Erhalt des oberflächenfunktionalisierten Formteils (oF).

3. Verfahren gemäß Anspruch 1 oder 2, **dadurch gekennzeichnet, dass** die dienophilhaltige Lösung (dL) mindestens ein Lösungsmittel (LM) enthält.

4. Verfahren gemäß Anspruch 3, **dadurch gekennzeichnet, dass** das mindestens eine Lösungsmittel (LM) ausgewählt ist aus der Gruppe bestehend aus Aceton, Acetonitril, N-Methyl-2-pyrrolidon, Dimethylformamid, Dimethylsulfoxid, Hexan, Toluol, Diethylether, Tetrahydrofuran, Methylenchlorid, Chloroform, 1,2-Dichlorbenzol, Wasser, Methanol, Ethanol und Isopropanol.

5. Verfahren gemäß einem der Ansprüche 1 bis 4, **dadurch gekennzeichnet, dass** die in dem mindestens einen Dienophil enthaltene mindestens eine Dienophileinheit ausgewählt ist aus der Gruppe bestehend aus C=C-Doppelbindungen, C=O-Doppelbindungen und C=S-Doppelbindungen.

6. Verfahren gemäß einem der Ansprüche 1 bis 5, **dadurch gekennzeichnet, dass** das in der dienophilhaltigen Lösung (dL) enthaltene mindestens eine Dienophil mindestens eine Struktureinheit ausgewählt aus der Gruppe bestehend aus Maleimiden, Benzophenon, Acrylaten, Methacrylaten, Acrylonitrilen, Maleinsäure, Maleinsäureanhydrid und Maleinsäureestern enthält.

7. Verfahren gemäß einem der Ansprüche 1 bis 6, **dadurch gekennzeichnet, dass** das in der dienophilhaltigen Lösung (dL) enthaltene mindestens eine Dienophil genau eine Dienophileinheit enthält.

8. Verfahren gemäß einem der Ansprüche 3 bis 7, **dadurch gekennzeichnet, dass** die dienophilhaltige Lösung (dL) im Bereich von 0 bis 99,5 Gew.-% des mindestens einen Lösungsmittels (LM) und im Bereich von 0,5 bis 100 Gew.-% des mindestens einen Dienophils enthält, jeweils bezogen auf das Gesamtgewicht der dienophilhaltigen Lösung (dL).

9. Verfahren gemäß einem der Ansprüche 1 bis 8, **dadurch gekennzeichnet, dass** Schritt ii) bei einer Temperatur im Bereich von 15 bis 150°C durchgeführt wird.

10. Verfahren gemäß einem der Ansprüche 1 bis 9, **dadurch gekennzeichnet, dass** das in der dienophilhaltigen Lösung (dL) enthaltene mindestens eine Dienophil mindestens eine weitere funktionelle Einheit enthält.

11. Verfahren gemäß Anspruch 10, **dadurch gekennzeichnet, dass** das mindestens eine Dienophil als mindestens eine weitere funktionelle Einheit eine funktionelle Einheit ausgewählt aus der Gruppe bestehend aus Anhydriden, Imiden, Estern, Carbonsäuren, Aminen, Alkoholen, Thiolen und Isocyanaten enthält.

12. Verfahren gemäß Anspruch 10 oder 11, **dadurch gekennzeichnet, dass** im Anschluss an Schritt ii) der folgende Schritt durchgeführt wird:
iii) Inkontaktbringen der funktionalisierten Oberfläche (fO) des in Schritt ii) erhaltenen oberflächenfunktionalisierten Formteils (oF) mit mindestens einem Funktionalisierungsmittel (FM), das mindestens eine reaktive Einheit, die gegenüber der in dem mindestens einen Dienophil enthaltenen mindestens einen weiteren funktionellen Einheit reaktiv ist, enthält.

13. Verfahren gemäß Anspruch 12, **dadurch gekennzeichnet, dass** die in dem mindestens einen Funktionalisierungsmittel (FM) enthaltene mindestens eine reaktive Einheit ausgewählt ist aus der Gruppe bestehend aus Aminen, Alkoholen, Thiolen, Isocyanaten, Carbonsäuren und Anhydriden.

14. Oberflächenfunktionalisiertes Formteil (oF) erhältlich nach einem Verfahren gemäß einem der Ansprüche 1 bis 13.

## Claims

1. A process for the production of a surface functionalized moulded part (SM), that has a functionalized surface (FS), encompassing the steps
i) provision of a moulded part (F) that has a surface (S) that comprises a polyamide (P), where the polyamide (P) comprises diene units of the general formula (I) 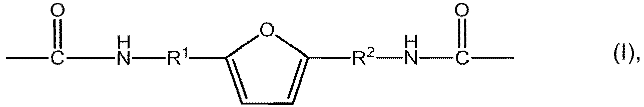 in which
R¹, R² are selected independently of each other from C₁-C₁₀-alkanediyl.
ii) bringing into contact the surface (S) of the moulded part (F) provided in step i) with a dienophile-containing solution (DS) that comprises at least one dienophile unit that is reactive towards the diene units (I) contained in the polyamide (P) to obtain the surface functionalized moulded part (SM) that has the functionalized surface (FS).

2. The process according to claim 1, wherein in step ii) the at least one dienophile unit contained in at least one dienophile reacts with the diene units (I) contained in the polyamide (P) in a [4+2] cycloaddition to obtain the surface functionalized moulded part (SM).

3. The process according to claim 1 or 2, wherein the dienophile-containing solution (DS) comprises at least one solvent (SV).

4. The process according to claim 3, wherein at least one solvent (SV) is selected from the group consisting of acetone, acetonitrile, N-methyl-2-pyrrolidone, dimethylformamide, dimethyl sulfoxide, hexane, toluene, diethyl ether, tetrahydrofuran, methylene chloride, chloroform, 1,2-dichlorobenzene, water, methanol, ethanol and isopropanol.

5. The process according to claims 1 to 4, wherein the at least one dienophile unit contained in at least one dienophile is chosen from the group consisting of C=C double bonds, C=O double bonds and C=S double bonds.

6. The process according to claims 1 to 5, wherein the at least one dienophile-contained in the dienophile-containing solution (DS) comprises at least one structural unit selected from the group consisting of maleimides, benzophenone, acrylates, methacrylates, acrylonitriles, maleic acid, maleic anhydride and maleic esters.

7. The process according to claims 1 to 6, wherein the at least one dienophile contained in the solution containing dienophiles (DS) comprises exactly one dienophile unit.

8. The process according to claims 3 to 7, wherein the dienophile-containing solution (DS) comprises in the range from 0 to 99.5 wt-% of at least one solvent (SV) and in the range from 0.5 to 100 wt-% of the at least one dienophile, in each case relating to the total weight of the dienophile-containing solution (DS).

9. The process according to claims 1 to 8, wherein step ii) is carried out in a temperature range from 15 to 150°C.

10. The process according to claims 1 to 9, wherein the at least one dienophile contained in the dienophile-containing solution (DS) comprises at least one further functional unit.

11. The process according to claim 10, wherein the at least one dienophile comprises, as at least one further functional unit, a functional unit selected from the group consisting of anhydrides, imides, esters, carboxylic acids, amines, alcohols, thiols and isocyanates.

12. The process according to claim 10 or 11, wherein the following step is carried out after step ii):
iii) bringing into contact the functionalized surface (FS) of the surface functionalized moulded part (SM) obtained in step ii) with at least one functionalising medium (FM) that comprises at least one reactive unit that is reactive toward the further at least one functional unit contained in the at least one dienophile.

13. The process according to claim 12, wherein the at least one reactive unit contained in the at least one functionalising medium (FM) is selected from the group of amines, alcohols, thiols, isocyanates, carboxylic acids and anhydrides.

14. A surface functionalized moulded part (SM) according to any of claims 1 to 13.

## Revendications

1. Procédé de fabrication d'une pièce moulée fonctionnalisée en surface (oF), qui comprend une surface fonctionnalisée (fO), comprenant les étapes suivantes :
i) la préparation d'une pièce moulée (F) qui présente une surface (O) qui contient un polyamide (P), le polyamide (P) contenant des unités diène de formule générale (I) 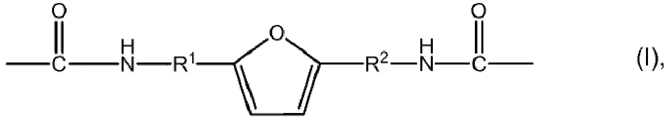 dans laquelle
R¹, R² sont choisis indépendamment l'un de l'autre parmi alcane-diyle en C₁-C₁₀,
ii) la mise en contact de la surface (O) de la pièce moulée (F) préparée à l'étape i) avec une solution contenant un diénophile (dL), qui contient au moins un diénophile, ledit au moins un diénophile contenant au moins une unité diénophile qui est réactive avec les unités diène (I) contenues dans le polyamide (P), pour obtenir la pièce moulée fonctionnalisée en surface (oF), qui présente la surface fonctionnalisée (fO).

2. Procédé selon la revendication 1, **caractérisé en ce qu'**à l'étape ii), ladite au moins une unité diénophile contenue dans ledit au moins un diénophile réagit avec les unités diène (I) contenues dans le polyamide (P) par une cycloaddition [4+2] pour obtenir la pièce moulée fonctionnalisée en surface (oF).

3. Procédé selon la revendication 1 ou 2, **caractérisé en ce que** la solution contenant un diénophile (dL) contient au moins un solvant (LM).

4. Procédé selon la revendication 3, **caractérisé en ce que** ledit au moins un solvant (LM) est choisi dans le groupe constitué par l'acétone, l'acétonitrile, la N-méthyl-2-pyrrolidone, le diméthylformamide, le diméthylsulfoxyde, l'hexane, le toluène, l'éther diéthylique, le tétrahydrofurane, le chlorure de méthylène, le chloroforme, le 1,2-dichlorobenzène, l'eau, le méthanol, l'éthanol et l'isopropanol.

5. Procédé selon l'une quelconque des revendications 1 à 4, **caractérisé en ce que** ladite au moins une unité diénophile contenue dans ledit au moins un diénophile est choisie dans le groupe constitué par les doubles liaisons C=C, les doubles liaisons C=O et les doubles liaisons C=S.

6. Procédé selon l'une quelconque des revendications 1 à 5, **caractérisé en ce que** ledit au moins un diénophile contenu dans la solution contenant un diénophile (dL) contient au moins une unité structurale choisie dans le groupe constitué par les maléimides, la benzophénone, les acrylates, les méthacrylates, les acrylonitriles, l'acide maléique, l'anhydride de l'acide maléique et les esters de l'acide maléique.

7. Procédé selon l'une quelconque des revendications 1 à 6, **caractérisé en ce que** ledit au moins un diénophile contenu dans la solution contenant un diénophile (dL) contient exactement une unité diénophile.

8. Procédé selon l'une quelconque des revendications 3 à 7, **caractérisé en ce que** la solution contenant un diénophile (dL) contient dans la plage allant de 0 à 99,5 % en poids dudit au moins un solvant (LM) et dans la plage allant de 0,5 à 100 % en poids dudit au moins un diénophile, à chaque fois par rapport au poids total de la solution contenant un diénophile (dL).

9. Procédé selon l'une quelconque des revendications 1 à 8, **caractérisé en ce que** l'étape ii) est réalisée à une température dans la plage allant de 15 à 150 °C.

10. Procédé selon l'une quelconque des revendications 1 à 9, **caractérisé en ce que** ledit au moins un diénophile contenu dans la solution contenant un diénophile (dL) contient au moins une autre unité fonctionnelle.

11. Procédé selon la revendication 10, **caractérisé en ce que** ledit au moins un diénophile contient en tant qu'au moins une autre unité fonctionnelle une unité fonctionnelle choisie dans le groupe constitué par les anhydrides, les imides, les esters, les acides carboxyliques, les amines, les alcools, les thiols et les isocyanates.

12. Procédé selon la revendication 10 ou 11, **caractérisé en ce que** l'étape suivante est réalisée après l'étape ii) :
iii) la mise en contact de la surface fonctionnalisée (fO) de la pièce moulée fonctionnalisée en surface (oF) obtenue à l'étape ii) avec au moins un agent de fonctionnalisation (FM), qui contient au moins une unité réactive, qui est réactive avec ladite au moins une autre unité fonctionnelle contenue dans ledit au moins un diénophile.

13. Procédé selon la revendication 12, **caractérisé en ce que** ladite au moins une unité réactive contenue dans ledit au moins un agent de fonctionnalisation (FM) est choisie dans le groupe constitué par les amines, les alcools, les thiols, les isocyanates, les acides carboxyliques et les anhydrides.

14. Pièce moulée fonctionnalisée en surface (oF) pouvant être obtenue par un procédé selon l'une quelconque des revendications 1 à 13.
